# EUROPÄISCHE PATENTSCHRIFT

(11) **EP 0 421 106 B1**
(45) Veröffentlichungstag und Bekanntmachung des Hinweises auf die Patenterteilung: **31.03.1993**
(21) Anmeldenummer: 90116045.7
(22) Anmeldetag: 22.08.1990
(51) Int. Cl.: B23F 9/10

(54) **Zweischnitt-Verfahren zur Herstellung eines bogenverzahnten gewälzten Kegelrades eines Kegelrad- oder Hypoidgetriebes**
Duplex cut method for making generated spiral bevel gears of a bevel or hypoid gear drive
Procédé de taillage duplex par génération pour la fabrication de roues d'engrenage conique spirale d'un engrenage conique ou hypoide

(30) Priorität: 04.09.1989 CH 3202/89
(43) Veröffentlichungstag der Anmeldung: 10.04.1991
(73) Patentinhaber: Oerlikon Geartec AG, 8050 Zürich (CH)
(72) Erfinder: Stadtfeld, Hermann, Dr., CH-8157 Dielsdorf (CH)
(74) Vertreter: Hunziker, Kurt

(56) Entgegenhaltungen:
- EP-A- 0 046 311
- CH-A- 417 284
- NASA TECHNICAL MEMORADUM 87075, veröffentlicht 1985, National Aeronautics andSpace Administration, Washington, DC 20546, US; F.L. LITVIN et al.: "Generated spiral bevel gears: Optimal machine-tool settings and tooth contact analysis"
- H.J. STADTFELD: "Anforderungsgerechte Auslegung BogenverzahnterKegelradgetriebe", 1987, Fakultät für Maschinenwesen derRheinisch-Westfälischen Technischen Hochschule Aachen, DE

## Beschreibung

### Zweischnitt-Verfahren zur Herstellung eines bogenverzahnten gewälzten Kegelrades eines Kegelrad- oder Hypoidgetriebes.

Die Erfindung bezieht sich auf ein Zweischnitt-Verfahren zur Herstellung eines bogenverzahnten gewälzten Kegelrades, vorwiegend des Ritzels eines Kegelrad- oder Hypoidgetriebes nach dem Oberbegriff des Patentanspruches.

Die Grundlage für alle realisierten Kegelradverzahnungstypen ist die exakte Verzahnung, welche für die Ritzel- und Tellerraderzeugung deckungsgleiche Erzeugerräder besitzt, weshalb Ritzel und Rad beim Abwälzen das Verzahnungsgesetz in jeder Wälzstellung erfüllen. Es besteht ständig Linienkontakt zwischen den abwälzenden Flanken, d.h. die Radflanke ist eine genaue "Konjunktion" der Ritzelflanke, weshalb die exakte Verzahnung auch als konjugierte Verzahnung bezeichnet wird.

Um zu deckungsgleichen Erzeugerrädern zu gelangen, ist eine geometrische und kinematische Anpassung der Verzahnmaschinen für Ritzel und Rad erforderlich. Dabei ist der Verlauf der Zahnhöhe proportional oder parallel die bedeutsamste Grösse. Zwischen der Form der Flankenlinie und der Lage der Erzeugerräder bzw. der Deckungsgleichheit der Erzeugerradflanken besteht kein Zusammenhang. Die Herstellung einer konjugierten Radpaarung hängt ausschliesslich von der Anordnung zwischen Wälztrommel, Messerkopf und Werkrad der Ritzel- und Tellerradverzahnmaschine ab.

Exakte Verzahnungen sind aber für den realen Einsatz ungeeignet, weil beispielsweise Abplattungen unter Last, Einbautoleranzen im Getriebegehäuse, Wellenlagersystem, Radkörper und Zähne etc. zu erheblichen Störungen im Betrieb führen. Reale Verzahnungen weisen deshalb eine Flankenballigkeit auf, zur Erzielung eines eingegrenzten Zahntragens. Insbesondere bekannt sind Höhen-, Längs- und Wälzballigkeit sowie wälzabhängige Korrekturen höherer Ordnung. Beispielsweise werden die Höhenballigkeit durch Messersphärik, die Längsballigkeit durch unterschiedliche Flugkreisradien oder durch Neigung der Messerkopfspindel gemäss Patentschrift CH 417 284 und die Wälzballigkeit durch kinematischen Effekt erzeugt. Meistens findet eine Kombination solcher Flankenkorrekturen sowohl bei der Herstellung von Kegelrädern mit proportionalen wie auch parallelen Zahnhöhen Anwendung. Das eingegranzte Zahntragen führt jedoch zu einer an sich unerwünschten Drehabweichung (Drehfehler), welche von der Grösse der Ballenkorrektur abhängig ist.

Bekannte Teil-Abwälzverfahren oder kontinuierliche Abwälzverfahren zur Herstellung von bogenverzahnten Kegelrädern mit proportionalen oder parallelen Zahnhöhen beziehen sich somit auf Verzahnmaschinenkorrekturen, welche die Lauffähigkeit von Verzahnungen gewährleisten und weiter die aufwendigen Mechanismen gleichzeitig zur Optimierung des Kontaktverhaltens sowie zur Verbesserung der kinematischen Verhältnisse beim Bearbeiten nutzen. Angestrebt wird dabei eine Idealverzahnung, welche bei jeder Belastung eine fehlerfreie Drehübertragung (keinen Drehfehler) und ein definiertes, nur vom Achsversatz abhängiges Tragbildverlagerungsverhalten aufweist.

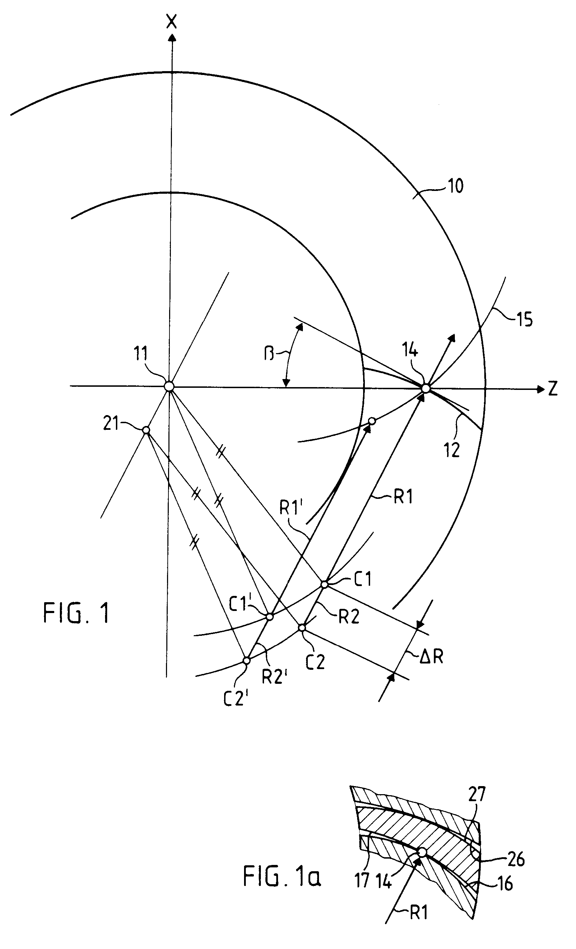

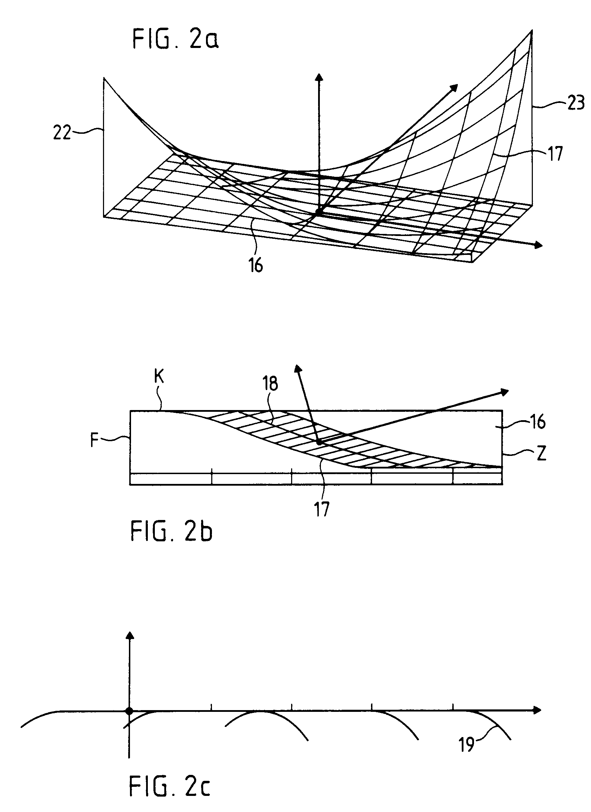

Aus der Literatur F.L. Litvin et al, "Generated Spiral Bevel Gears: Optimal Machine-Tool Settings and Tooth Contact Analysis", SAE Technical Paper Series 851573, 1985 ist ein Auslegungsprinzip zur Herstellung von Kegelrädern mit proportionaler Zahnhöhe erstmals bekannt geworden, mit dem eine Berührlinienballigkeit ohne Drehfehler erzeugt werden kann. Das Auslegungsprinzip wird anhand von Figuren 1 und 2 später in der Beschreibung erläutert. Die vorgeschlagenen Korrekturmassnahmen beruhen auf einer Veränderung des Flugkeisradius und einer gedachten gleichgerichteten und gleichgrossen Verschiebung des Erzeugerraddrehpunktes und der Messerkopfachse bei den Herstellungen der Zahnflanken des Ritzels gegenüber den zugeordneten Zahnflanken des Rades.

Ein variabler Flugkreisradius bedingt aber einen Messerkopf mit stufenlos verstellbaren Messern, um den jeweiligen exakten Radius der Innen- und Aussenschneiden um Beträge von ca. 1 mm bis 10 mm zu verstellen, was sich ungünstig auf die Genauigkeit und die Steifigkeit auswirkt. Solche Messerköpfe, meist mit reduzierter Messerzahl, wurden bisher nur für Laborversuche hergestellt oder es werden handelsübliche Messerköpfe für Laborversuche speziell modifiziert. Ferner bedingt die Berührlinienballigkeit unterschiedliche Maschineneinstellungen für die Herstellung der Schub- und der Zugflanken und schliesst damit das Schneiden beider Zahnflanken am Ritzel mit einem Messerkopf in einem Arbeitsgang, also das Einschnitt- oder Zweiflankenschnitt-Verfahren aus. Das erforderliche Zweischnitt-Verfahren, bei dem Schub- und Zugflanken mit je einem Messerkopf separat geschnitten werden, ermöglicht aber hochoptimierte Kegelgetriebe, insbesondere bezüglich Laufruhe und Festigkeit, und ist ferner zur Zeit die einzige bekannte Methode zur Erzeugung reiner Berührlinienballigkeit.

Der Erfindung liegt die Aufgabe zugrunde, das durch Litvin et al bekanntgewordene Verfahren zur Herstellung eines Ritzels eines Kegelradgetriebepaares mit Berührlinienballigkeit derart zu verbessern, dass es allgemein und wirtschaftlich einsetzbar wird.

Diese Aufgabe wird durch die im Kennzeichen des Anspruches aufgeführten Verfahrensschritte gelöst.

Die durch die Erfindung erreichten Vorteile sind im wesentlichen darin zu sehen, dass nunmehr handelsübliche Messerköpfe verwendet werden können und dies uneingeschränkt sowohl bei der Herstellung von proportionalen wie auch parallelen Zahnhöhen.

Im folgenden wird das Auslegungsprinzip nach Litvin et al (Stand der Technik) und Ausführungsbeispiele der Erfindung anhand von Zeichnungen erläutert.

Es zeigt:
- Fig.1: schematisch das Konstruktionsprinzip der Berührlinienballigkeit nach Litvin und a) einen Schnitt durch eine Tellerradzahnlücke und einen Ritzelzahn;
- Fig.2: eine Kontaktanalyse der Berührlinienballigkeit mit a) ease-off-Darstellung, b) Tragbild und c) Drehübertragung;
- Fig.3 und 4: schematisch je zwei Messerköpfe im Schnitt in ihrer gegenseitigen Stellung beim Schneiden entsprechender Zahnflanken.

Das in Fig.1 schematisch dargestellte Konstruktionsprinzip der Berührlinienballigkeit nach Litvin zeigt ein Erzeugerrad 10 mit einem Drehpunkt 11, der beispielsweise auf einer gedachten Wälztrommelachse liegt, und einer Flankenlinie 12 mit einem Auslegungspunkt 14 und zugeordnetem Spiralwinkel β. Ein Drehpunkt C1 stellt eine Messerkopfachse dar. Die Verbindungslinie vom Drehpunkt C1 zum Auslegungspunkt 14 entspricht einem Flugkreisradius R1 eines zur Erzeugung eines Tellerrades gedachten Messerkopfes, beispielsweise der Innenschneiden zur Erzeugung von konvexen Flankenlinien 16 des Tellerrades. Zur Erzeugung einer reinen Berührlinienballigkeit schlägt nun Litvin vor, den Flugkreisradius und damit den Drehpunkt eines Messerkopfes zur Erzeugung eines zugeordneten Ritzels zu verändern, wobei nun ebenfalls der Drehpunkt des Erzeugerrades gleichsinnig zu verändern ist. Auf Fig.1 bezogen ergeben sich somit beispielsweise zur Erzeugung von konkaven Flankenlinien 17 des zu wälzenden Ritzels mit den Aussenschneiden eines Messerkopfes die folgenden neuen Einstellungen. Der neue Flugkreisradius R2 wird nun um den Betrag Δ R vergrössert und der Messerkopf dreht nun um den Drehpunkt C2. Durch eine gleichgrosse und gleichgerichtete Verschiebung wird der Drehpunkt 11 zum neuen Drehpunkt 21. Die Verbindungslinien der Drehpunkte 11, 21, C1 und C2 bilden ein Parallelogramm. Bewegt man dieses Parallelogramm um die Drehpunkte 11 und 21, so beschreiben die Pfeilspitzen der Flugkreisradien R1 und R2 eine Linie gleicher Eingriffswinkel 15, ohne jegliche Flankenkorrektur, siehe C1′, C2′, R1′ und R2′. Diese Linie 15 bildet in der Kontaktanalyse den "path of contact", der zur Drehfehlerfreiheit innerhalb des Flankenbereiches führt.

Fig.2 zeigt die Kontaktanalyse-Ergebnisse der Zugseiten einer Verzahnung mit Berührlinienballigkeit nach Litvin, wobei gemäss
a) eine "ease-off" Darstellung die Flankenfläche 16 des Tellerrades und die Flankenfläche 17 des zugeordneten Ritzels,
b) ein Tragbild die Flankenfläche 16 mit den Bereichen Kopf K, Ferse F und Zehe Z sowie einen "path of contact" 18 mit der Flankenfläche 17 und
c) eine Drehübertragung entsprechende Drehabweichungen 19 im Mehrfacheingriff zeigen.

Gemäss der "ease-off" Darstellung ist die Flankenfläche 17 gegenüber der Flankenfläche 16 verwunden mit zwei diagonal gegenüberliegenden Luftspaltspitzenwerten 22 und 23 von z.B. ca. 0,15 und 0,2 mm. Im mittleren Flankenbereich haben die Berührlinien eine konstante Länge im Tragbild b), gegeben durch die konstante Berührlinienballigkeit. Es stellt sich somit ein "bias-in" Zahntragen ein. Eine Drehabweichung im potentiellen Flankenbereich ist nicht vorhanden, lediglich beim Einlauf an der Kopfkante und beim Auslauf an der Übergangslinie entstehen kleine Drehabweichungen 19. Bei Mehrfacheingriff findet also somit eine exakte Bewegungsübertragung statt.

Wird eine Maschine mit einer Wälztrommel verwendet, so müssen die Drehpunkte 11 und 21 auf der Wälztrommelachse liegen. Da die Wälztrommelachse nicht von 11 nach 21 verschoben werden kann, ändert sich in Fig.1 nur der Flugkreisradius von R1 zu R2. Um die relative Lageänderung des Ritzels zu Wälztrommel und Messerkopf zu erreichen, werden Ritzel und Messerkopf an der Maschine entsprechend neu eingestellt und zusätzlich ergeben sich auch neue Schneidenwinkel an den entsprechenden Messern des Messerkopfes. Dies ergibt sich aus der Litvin-Literatur und ist deshalb hier nicht im Detail dargestellt. Weiter ergibt sich, dass zur Erzeugung der anderen Ritzelflanken mit den in Fig.1 a) dargestellten konvexen Flanken 27 der Flugkreisradius um einen Betrag zu verkürzen ist gegenüber dem entsprechenden Flugkreisradius zur Erzeugung der konkaven Flanken 26 des Tellerrades. Auch die Drehpunkte 11 und C1 sind dann entsprechend gleichsinnig zu ändern.

Erfindungsgemäss wird nun vorgeschlagen, die Veränderung der Flugkreisradien bei der Erzeugung der jeweiligen konvexen und konkaven Zahnflanken für das Ritzel nicht durch entsprechende Massnahmen am Messerkopf sondern durch Neigung der Messerkopfachse mit vorgegebenen Richtung und Betrag zu erzielen.

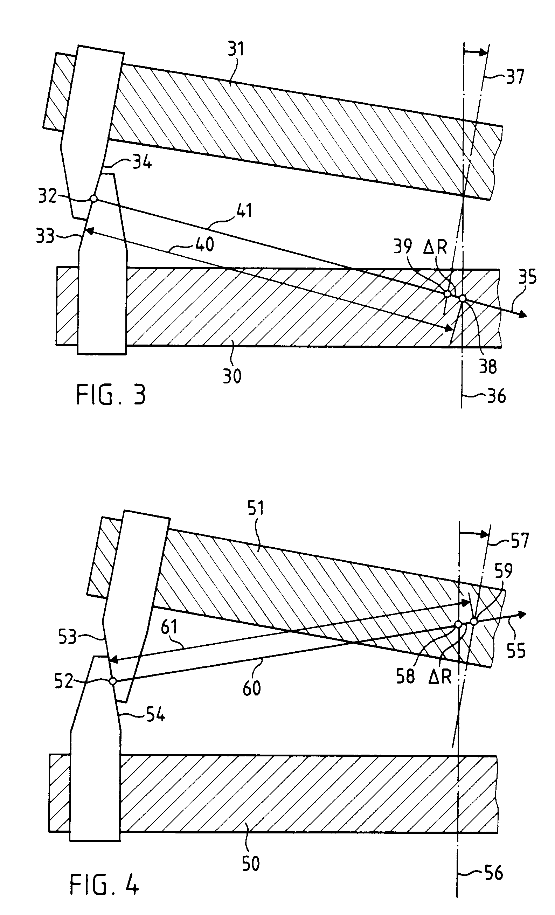

In den Fig.3 und 4 ist in vereinfachter Form der Einfluss der Neigung der Messerkopfachse auf den Flugkreisradius dargestellt. Dabei sind je zwei Messerköpfe 30 und 31 bzw. 50 und 51 so einander gegenübergestellt, dass je ein Auslegungspunkt 32 und 52 gemeinsam auf je einer Aussenschneide 33 bzw. 53 und einer Innenschneide 34 bzw. 54 liegt. Dabei schneiden sich die Messerkopfachsen 36 und 37 bzw. 56 und 57. Je die beiden zugeordneten Messerkopfachsen werden ebenfalls von je einer Normalen 35 bzw. 55 auf die Schneiden im jeweiligen Auslegungspunkt 32 bzw. 52 geschnitten. Diese Schnittpunkte sind mit 38 und 39 bzw. 58 und 59 bezeichnet. Die Messerköpfe 30 und 50 sind in diesem Beispiel identisch und schneiden die Zahnlücken eines nicht dargestellten Tellerrades, d.h. die Aussenschneiden 33 schneiden die konkaven und die Innenschneiden 54 die konvexen Zahnflanken. Mit dem Messerkopf 31 werden mit den Innenschneiden 34 die konvexen Zahnflanken und mit den Aussenschneiden 53 des Messerkopfes 51 die konkaven Zahnflanken eines nicht dargestellten Ritzels geschnitten.

Die erfindungsgemässe Neigung der Messerköpfe 31 und 51 im Zweischnitt-Verfahren zur Herstellung des Ritzels ergibt sich wie folgt: Die Normale 55 in Fig.4 zwischen dem Auslegungspunkt 52 und dem Schnittpunkt 58 entspricht einem effektiven Flugkreisradius 60 der Innenschneiden des Messerkopfes 50 zur Erzeugung der konvexen Zahnflanken des Tellerrades und die Strecke zwischen den Punkten 52 und 59 entspricht einem effektiven Flugkreisradius 61 der Aussenschneiden des Messerkopfes 51 zur Erzeugung der konkaven Zahnflanken des Ritzels. Die Strecke zwischen den Punkten 58 und 59 kann mit ΔR bezeichnet werden. Die Darstellung der Fig.4 entspricht derjenigen von Fig.1 in bezug auf die Zahnflanken und auf die Flugkreisradien der beiden Messerköpfe, d.h. die Flugkreisradien 60 bzw. R1 sind kleiner als 61 bzw. R2, wobei nun in Fig.4 dies durch eine Neigung der Messerkopfachse 57 in Pfeilrichtung bzw. in Richtung weg vom Auslegungspunkt 52 erreicht wird. Die Schnittpunkte 58 und 59 entsprechen nun den Drehpunkten C1 und C2 in Fig.1 bzw. bilden die Drehpunkte der Messerköpfe 50 und 51. Analog ergeben sich nun in Fig.3 ein effektiver Flugkreisradius 40 für die Aussenschneiden 33 des Messerkopfes 30 zur Erzeugung der konkaven Zahnflanken des Tellerrades und ein effektiver Flugkreisradius 41 für die Innenschneiden 34 des Messerkopfes 31 zur Erzeugung der konvexen Zahnflanken des Ritzels, wobei richtigerweise der Flugkreisradius 41 kleiner als der Flugkreisradius 40 ist sowie Drehpunkte 38 und 39 für die Messerköpfe 30 und 31. Überraschenderweise wird dies aber durch eine Neigung der Messerkopfachse 37 in die gleiche Richtung wie in Fig.4 in Richtung weg vom Auslegungspunkt 32 erreicht.

Durch diese Neigung der Messerkopfachsen zur Veränderung der Flugkreisradien der Ritzelmesserköpfe in Verbindung mit der relativen Lageänderung des Ritzels zum Drehpunkt 11 kann nun eine Berührlinienballigkeit mit handelsüblichen Messerköpfen erzeugt werden, wodurch das Verfahren real und wirtschaftlich einsetzbar wird.

Tellerräder können wie üblich mit den bekannten Einschnitt-Verfahren hergestellt werden. Ritzel werden beispielsweise im Zweischnitt-Verfahren zuerst mit Vorschneider und Aussenschneider bearbeitet, zur Herstellung der konkaven Zahnflanken. Anschliessend wird die Maschine umgestellt und die konvexen Zahnflanken bearbeitet mit einem Messerkopf, welcher nur mit Innenschneiden bestückt ist. Bei automatisch umstellbaren Verzahnmaschinen ist es auch möglich, mit einem vollbestückten Messerkopf in einer ersten Einstellung die Zahnlücken zu schruppen. Die Maschine stellt sich anschliessend selbsttätig um und schlichtet z.B. die konvexen Flanken. Danach stellt sich die Maschine wiederum selbsttätig um und schlichtet die konkaven Flanken. Dadurch können wirtschaftlich in einer Aufspannung und mit einem Messerkopf Ritzel nach dem erfindungsgemässen Zweischnitt-Verfahren, das sich an sich auf das Schlichten der Zahnflanken bezieht, verzahnt werden.

In der Praxis werden jedoch die Maschineneinstellungen so gewählt, dass ausser der Berührlinienballigkeit zugleich auch in bekannter Weise andere Ballenkorrekturen, z.B. Höhen-, Längs- und Wälzballigkeiten erreicht werden.

## Patentansprüche

1. Zweischnitt-Verfahren zum Herstellen eines bogenverzahnten gewälzten Kegelrades, vorwiegend des Ritzels eines Kegelrad- oder Hypoidgetriebes auf einer Verzahnmaschine durch Schneiden von konkaven (17) und konvexen (27) Zahnflanken mit je einem um die Messerkopfachse (37,57) rotierenden und mit Aussen- oder Innenschneiden (53 oder 34) aufweisenden Messern versehenen Messerkopf (31,51), wobei eine angenäherte Berührlinienballigkeit mit konjugierenden Zahnflanken (16,26) eines Gegenrades erzeugt wird, indem der Flugkreisradius (R2) je der Aussen- und der Innenschneiden und damit je der Drehpunkt (C2) des Messerkopfes sowie der Drehpunkt (21) (Wälztrommelachse) eines Erzeugerrades (10) gegenüber den Werten (R1,11) bei der Herstellung des Gegenrades verändert werden, derart, dass die Verbindungslinien der Drehpunkte (C1, C2, 11, 21) je von Messerkopf und Erzeugerrad ein Parallelogramm bilden für die konjugierenden Zahnflanken von Rad und Ritzel, dadurch gekennzeichnet, dass die Veränderung der Flugkreisradien (61,41) je der Aussen- und Innenschneiden (53,34) durch Neigung der Messerkopfachsen (57,37) bewirkt werden, indem die Messerkopfachsen (37,57) in Richtung weg von den Auslegungspunkten (32,52) geneigt werden und Schnittpunkte (39,59) der Messerkopfachsen (37,57) mit Normalen (35,55), zu den Auslegungspunkten (32,52) auf Schneiden (33,34 bzw. 53,54) der Messer, die veränderten Drehpunkte der Messerköpfe bilden.

## Claims

1. Duplex-cut method for making generated spiral bevel gears, in particular a pinion of a bevel or hypoid gear, on a toothing machine by cutting concave (17) and convex (27) tooth flanks by means of a respective knifehead (31, 51), which comprises outside or inside cutters (53 or 34) and which rotates around the knifehead axis (37, 57), in which respect a virtual contact-line convexity with conjugating tooth flanks (16, 26) of a countering gear is produced, in that the gyratory radius (R2) of the respective outside and inside cutters, and thus a respective rotary point (C2) of the knifehead as well as the rotary point (21)(roller-drum axis) of a generating wheel (10) can be changed relative to the values (R1, 11) during production of a countering gear, so that the connecting lines of the rotary points (C1, C2, 11, 21) of a respective knifehead and generating wheel form a parallelogram for the conjugating tooth flanks of gear and pinion, **characterised in that** the changing of gyratory radii (61, 41) of the respective outside and inside cutters (53, 34) is effected by inclination of the knifehead axes (57, 37), in that the knifehead axes (37, 57) are inclined in the direction away from the configuration points (32, 52) and points of intersection (39, 59) of the knifehead axes (37, 57) with normals (35, 55) to the configuration points (32, 52) on cutters (33, 34 or 53, 54 respectively) of the knives form the changed rotary points of the knifeheads.

## Revendications

1. Procédé de taille duplex en développante, d'engrenages coniques à denture en spirale, selon lequel la roue dentée d'une transmission à roue conique ou à roue hypoïde est réalisée sur une machine de taille d'engrenage par taillage des flancs concaves (17) et convexes (27) avec une tête porte-couteaux (31, 51) munie de couteaux, tournant autour de l'axe (37, 57) et des couteaux ayant des arêtes extérieures et des arêtes intérieures (53) ou (34) et selon lequel on génère un bombage de la ligne de contact, approchée avec des flancs dentés conjugués (16, 26) d'un pignon antagoniste, en ce que le rayon du cercle de trajectoire (R2) de chaque fois les arêtes extérieures et intérieures et ainsi chaque fois le centre de rotation (C2) de la tête porte-couteaux ainsi que le centre de rotation (21) (axe du tambour de roulement) en développante d'une roue génératrice (10) sont déplacés par rapport aux valeurs (R1, 11) correspondant à la fabrication de la roue antagoniste, de façon que les lignes de jonction des centres de rotation (C1, C2, 11, 21) d'une tête porte-couteaux et d'une roue génératrice forment un parallélogramme pour les flancs de dents conjugués de la roue et du pignon, caractérisé en ce que la modification des rayons des cercles de trajectoires (61, 41) des arêtes extérieures et intérieures (53, 34) respectives par inclinaison des axes du porte-couteaux (57, 37), en ce qu'on incline les axes des porte-couteaux (37, 57) en les écartant des points courants (32, 52) et les points d'intersection (39, 59) des axes des têtes porte-couteaux (37, 57) forment avec les normales (35, 55) aux points courants (32, 52) sur les arêtes (33, 34, 53, 54) des couteaux, les centres de rotation modifiés des têtes porte-couteaux.
